# EUROPEAN PATENT APPLICATION

(11) **EP 3 660 028 A1**
(43) Date of publication of application: **03.06.2020**
(21) Application number: 17919503.7
(22) Date of filing: 14.11.2017
(51) Int. Cl.: C07F 9/6574, C08G 73/12, C08K 5/5313

(54) **INTRINSIC FLAME-RETARDANT RESIN WITH LOW POLARITY, AND PREPARATION METHOD THEREFOR AND USE THEREOF**

(30) Priority: 26.07.2017 CN 201710618308
(71) Applicant: Shengyi Technology Co., Ltd., Dongguan City, Guangdong 523808 (CN)
(72) Inventor: SU, Minshe, Dongguan Guangdong 523808 (CN)
(74) Representative: Plougmann Vingtoft a/s
(86) International application number: PCT/CN2017/110811
(87) International publication number: WO 2019/019483

(57) **Abstract**

Provided are an intrinsic flame-retardant resin with a low polarity, and a preparation method therefor and the use thereof. The intrinsic flame-retardant resin with a low polarity has a structure as shown in formula I and is a phenolic compound or resin which is prepared by a three-step reaction of allyl etherification, rearrangement and terminating with a phosphorus-containing group. The resin does not contain polar hydroxyl groups in the molecular formula thereof, and has a stable molecular structure, low polarity and high reactivity, and does not generate polar hydroxyl groups during application and processing, thereby avoiding the influence of secondary hydroxyl groups on the performance of products thereof. While the resin improves the dielectric performance, same still has crosslinkable groups which lead to no significant change in high temperature resistance after curing. Introduction of the phosphorus-containing capping group allows the resin to have intrinsic flame-retardant performance. Using the resin in the preparation of a metal foil clad laminate facilitates reducing the dielectric constant and dielectric loss of the metal foil clad laminate, and results in higher high temperature resistance and improved flame retardancy, so that the metal foil clad laminate has a good comprehensive performance and broad application prospects.

## Description

### Technical field

The present invention belongs to the technical field of thermosetting resins, and relates to an intrinsic flame-retardant resin with a low polarity, a preparation method and a use thereof.

### Background art

High-performance thermosetting resins are widely used in resin matrix of composite materials, high temperature resistant insulation materials and adhesives in the fields of aerospace, rail transit, power insulation, and microelectronic packaging due to their excellent heat resistance, flame retardancy, weather resistance, electrical insulation, good mechanical properties and dimensional stability. High-performance thermosetting resins which are commonly used are epoxy resins, phenolic resins, bismaleimide resins etc. However, the above-mentioned resins have brittleness, resulting in insufficient impact resistance of the materials. The molecular structure of resins has a high polarity, resulting in the weaknesses such as high dielectric constant and loss, so as to limit its promotion and application in certain fields. Researches on the modification of thermosetting resins have always been the research topic of concern for material workers.

In recent years, high temperature resistant thermosetting resins represented by bismaleimide resins have been increasingly used in the fields of aerospace radar radomes, rail transit circuit insulation materials and microelectronic circuit boards. With the rapid developments of the above-mentioned industries, the electromagnetic transmission power and frequency are increasing, and the requirements on the wave transmission and insulation property of materials are increasing. The ordinary high temperature resistant thermosetting resins have high dielectric constant and loss, and their wave transmission and insulation property cannot meet the design requirements of radar, insulation materials and microelectronic circuit boards. Therefore, it has always been the technical bottleneck concern of researchers how to reduce the polarity of the resins, and thus reduce the dielectric constant and loss.

Synthesizing new structural monomers or resins is a viable way to reduce dielectric constant and loss. CN104311756A discloses a silicon-containing bismaleimide resin, wherein the introduction of silicon-containing groups can reduce the dielectric constant below 3.0. CN104479130A discloses a novel bismaleimide monomer having a fluorine-containing structure, which significantly reduces the dielectric constant and loss of the bismaleimide resin. However, the above-mentioned novel structural bismaleimide monomers have complicated synthesis processes, high costs, and are difficult to prepare and apply in batches. In addition, the modification by copolymerization with other resins is one of the important methods to improve the insulation property of thermosetting resins. CN101338032A discloses modifying bismaleimide resins by using cyanate and preparing a prepreg, wherein the dielectric constant and loss of the composite material are significantly reduced. Although such method has certain effects on improving the dielectric properties of the resins, there is a limited extent and still a certain gap between the method and the application.

Flame retardancy is one of the important properties of composite materials. However, with the increasingly strict environmental protection regulations, bromine-containing flame retardants have gradually withdrawn from the field of information electronics, and replaced by new flame retardants containing phosphorus or nitrogen. However, in order to achieve desired flame retardant effect, the above flame retardants are generally added in large amounts, and the addition has a significant influence on the high temperature resistance and mechanical strength of composite materials. Therefore, the development of matrix resin with intrinsic flame retardancy is a future development trend.

Therefore, it is desirable in the art to obtain a low-polarity intrinsic flame-retardant resin material to lower the dielectric constant and loss of a cured product thereof, enhance flame retardancy, and at the same time maintain excellent properties of copper clad laminates on other aspects.

### Disclosure of the invention

In view of the deficiencies of the prior art, the object of the present invention lies in providing an intrinsic flame-retardant resin with a low polarity, a preparation method and a use thereof. The resin of the present invention contains no polar groups (*e.g*. hydroxyl groups), has low molecular polarity and high reactivity, and lowers the dielectric constant and loss of the cured product. The allyl structure in the resin structure realizes crosslinking curing to ensure the mechanical strength after curing and ensure that the cured product has excellent heat resistance. Meanwhile, the resin structure has a flame-retardant phosphorus-containing structure, so as to have a good intrinsic flame-retardant effect.

In order to achieve such object, the present invention discloses the following technical solutions.

On the first aspect, the present invention provides an intrinsic flame-retardant resin with a low polarity having a structure as shown in Formula I: 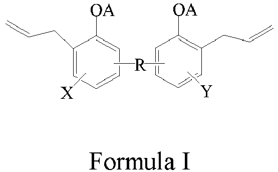 wherein R is a linear or branched alkyl, 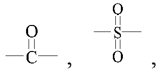 -O- , 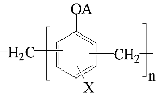 or 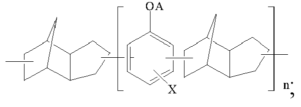 X and Y are independently selected from the group consisting of hydrogen, allyl, linear alkyl, branched alkyl, and a combination of at least two selected therefrom; A is a phosphorus-containing capping group; and n is an integer of 1-20.

In the intrinsic flame-retardant resin with a low polarity of the present invention, said low polarity refers to containing no polar groups, in particular no hydroxyl groups, so as to make resins have extremely low polarity and to overcome the deficiencies of high-frequency dielectric constant and high loss resulted by high polarity of common thermosetting resins. The allyl structure in the structure realizes crosslinking curing to ensure the mechanical strength after curing and ensure that the cured product has excellent heat resistance. Meanwhile, the resin structure has a flame-retardant phosphorus-containing structure, so as to have a good intrinsic flame-retardant effect.

Preferably, R is a linear alkyl of C1-C6 (*e.g.* C1, C2, C3, C4, C5 or C6) or a branched alkyl of C3-C6 (*e.g.* C3, C4, C5 or C6), specifically -CH₂-, 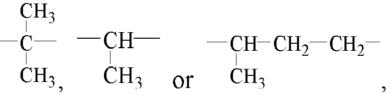 etc. Preferably, R is selected from the group consisting of -CH₂-, 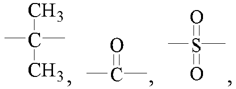 -O-, 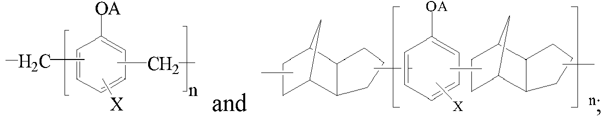 n is an integer of 1-20; X and Y are independently selected from the group consisting of hydrogen, allyl, linear alkyl, branched alkyl, and a combination of at least two selected therefrom; and A is a phosphorus-containing capping group.

In the present invention, n is an integer of 1-20, *e.g.* 1, 2, 3, 4, 5, 6, 7, 8, 9, 10, 11, 12, 13, 14, 15, 16, 17, 18, 19 or 20.

Preferably, X and Y are independently linear alkyl of C1-C21 (*e.g.* C1, C2, C3, C4, C5, C6, C7, C8, C9, C10, C11, C12, C13, C14, C15, C16, C17, C18, C19, C20 or C21) or branched alkyl of C3-C21 (*e.g.* C3, C4, C5, C6, C7, C8, C9, C10, C11, C12, C13, C14, C15, C16, C17, C18, C19, C20 or C21).

Preferably, A is a DOPO-containing group, preferably anyone selected from the group consisting of

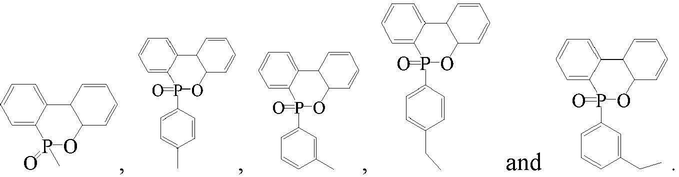

Preferably, the intrinsic flame-retardant resin with a low polarity is anyone selected from the group consisting of the compounds having the following Formulae A-E, and a combination of at least two selected therefrom: 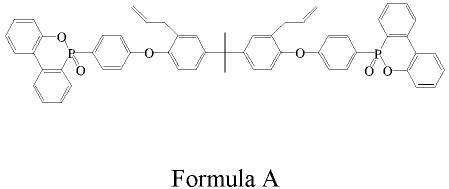 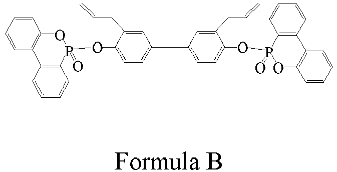 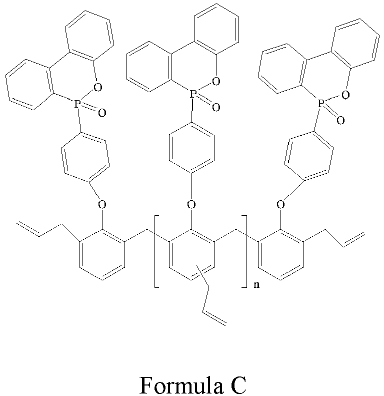 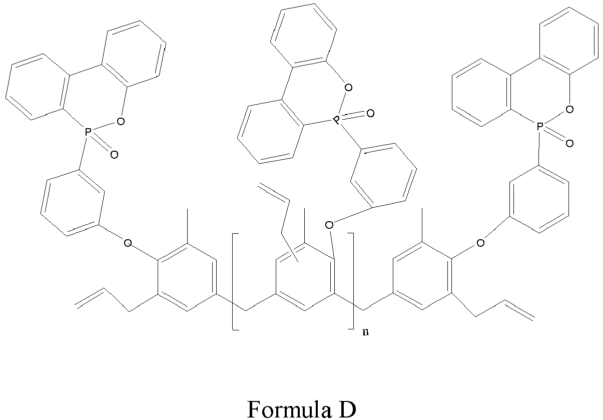 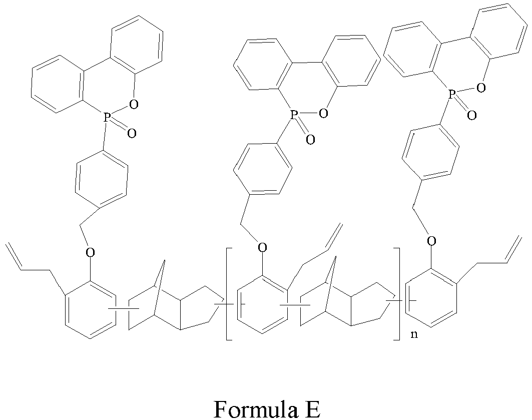 wherein n is an integer of 1-20.

On the second aspect, the present invention provides a process for preparing the intrinsic flame-retardant resin with a low polarity as described above, comprising the following steps:
(1) a phenolic compound or a phenolic resin of Formula II is reacted with an allylation reagent to obtain an allyl etherified resin of Formula III, wherein the reaction formula is as follows: 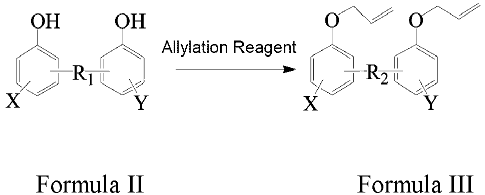
(2) the allyl etherified resin of Formula III is heated under the protection of a protective gas, and an intramolecular rearrangement reaction occurs to obtain an allylated phenolic resin of Formula IV: 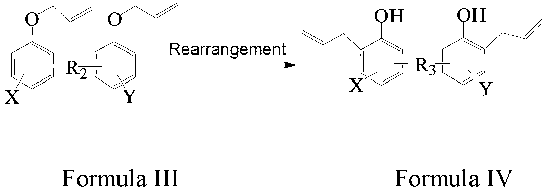
(3) the allylated phenolic resin of Formula III is reacted with a phosphorus-containing capping reagent to obtain the intrinsic flame-retardant resin with a low polarity of Formula I: 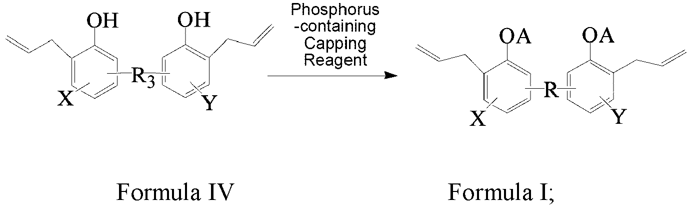 wherein R₁ is selected from the group consisting of linear or branched alkyl, 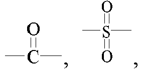 -O-, 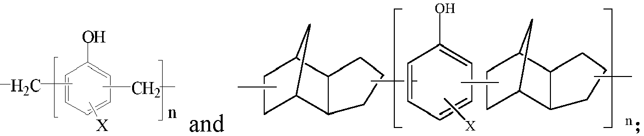 R₂ is selected from the group consisting of linear or branched alkyl, 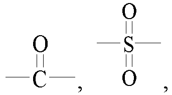 -O-, 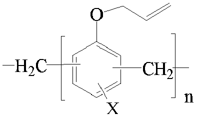 and 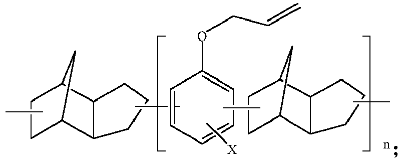 R₃ is selected from the group consisting of linear or branched alkyl, 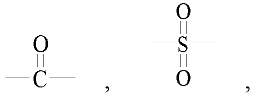 -O- , 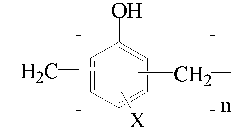 and 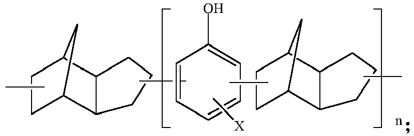 R is selected from the group consisting of linear or branched alkyl, 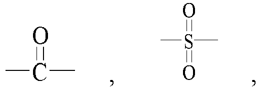 -O- , 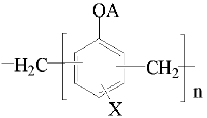 and 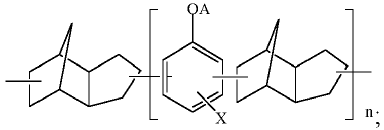 X and Y are independently selected from the group consisting of hydrogen, allyl, linear alkyl, branched alkyl, and a combination of at least two selected therefrom; A is a phosphorus-containing capping group; and n is an integer of 1-20.

In the rearrangement step of step (2) of the present invention, when R₂ is 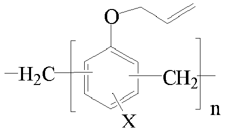 or 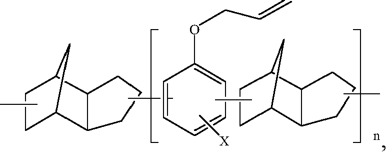 the rearrangement of allyl ether group therein will occur, resulting in that the intermediate unit R₃ in the allylated phenolic resin represented by Formula IV contains allyl groups generated by rearrangement, and further that the unit R in the low-polarity resin represented by Formula I contains allyl groups generated by rearrangement. For simplicity of expression, the present invention does not directly represent such allyl group in the corresponding structures of R₃ and R, and only X represents all substituents on the benzene ring. However, it is clear here that X contains allyl groups generated by rearrangement.

If R₂ is 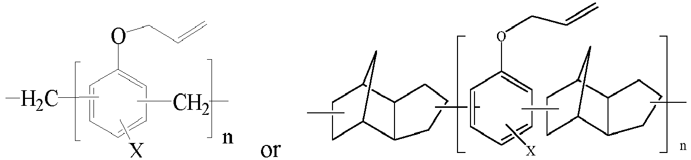 before the rearrangement reaction, and other substituents X are present on the benzene ring, X in the structure of 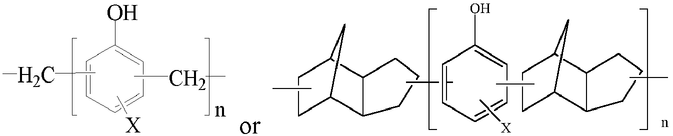 of R₃, after the rearrangement reaction of step (2), may represent a combination of allyl groups generated by the rearrangement and other substituents before the reaction. Certainly, the rearrangement step of step (2) also includes the case that no rearrangement reaction of allyl ether group in unit R₂ occurs when R₂ is 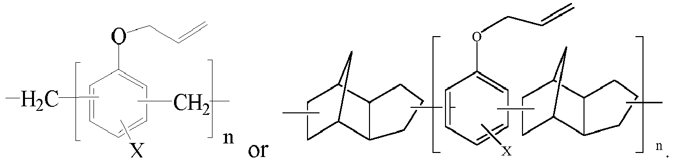 At this time, X in R₃ and the product R after the reaction is the same as group X in R₂ in the allyl etherified resin represented by Formula III before the reaction.

Preferably, the phenolic compound or phenolic resin in step (1) is phenol, dihydric phenol, polyhydric phenol or derivatives thereof, preferably anyone selected from the group consisting of phenol, o-cresol, bisphenol A, bisphenol F, tetramethyl bisphenol A, phenol resin, o-cresol novolac resin, cyclopentadiene novolac resin, and a combination of at least two selected therefrom.

Preferably, the allylation reagent is anyone selected from the group consisting of allyl silanol, allyl chloride, allyl bromide, allyl iodide, allylamine, and a combination of at least two selected therefrom.

Preferably, the molar ratio of the phenolic hydroxyl groups in the phenolic compound or phenolic resin to the allyl groups in the allylation reagent is 1 : (0.3-1.2), *e.g.* 1:0.3, 1:0.4, 1:0.5, 1:0.6, 1:0.7, 1:0.8, 1:0.9, 1:1, 1:1.1 or 1:1.2.

Preferably, the reaction in step (1) is carried out in the presence of a basic substance which is preferably anyone selected from the group consisting of sodium hydroxide, potassium hydroxide, sodium carbonate, potassium carbonate, and a combination of at least two selected therefrom.

Preferably, the molar ratio of the basic substance to the phenolic hydroxyl groups contained in the phenolic compound or phenolic resin in step (1) is (0.3-1.4) : 1, e.g. 0.3:1, 0.4:1, 0.5:1, 0.6:1, 0.7:1, 0.8:1, 0.9:1, 1:1, 1.1:1, 1.2:1, 1.3:1 or 1.4:1.

Preferably, the reaction in step (1) is carried out in the presence of a phase transfer catalyst.

Preferably, the phase transfer catalyst is quaternary-ammonium-salt phase transfer catalysts, preferably anyone selected from the group consisting of tetrabutylammonium chloride, tetrabutylammonium bromide, benzyltriethylammonium chloride, tetrabutylammonium hydrogen sulfate, trioctylmethylammonium chloride, dodecyltrimethylammonium chloride, tetradecylbromotrimethylammonium chloride, and a combination of at least two selected therefrom.

Preferably, the phase transfer catalyst is added in an amount of 0.1 to 5%, *e.g.* 0.1%, 0.3%, 0.5%, 0.8%, 1%, 1.3%, 1.5%, 1.8%, 2%, 2.3%, 2.5%, 2.8%, 3%, 3.3%, 3.5%, 3.8%, 4%, 4.3%, 4.5%, 4.8% or 5%, by mass of the phenolic compound or phenolic resin of step (1).

Preferably, the solvent of the reaction in step (1) is anyone selected from the group consisting of alcohol solvents, aromatic hydrocarbon solvents, ketone solvents, and a combination of at least two selected therefrom, preferably anyone selected from the group consisting of ethanol, propanol, butanol, toluene, xylene, and a combination of at least two selected therefrom.

Preferably, the solvent is added in an amount of 2-5 times, *e.g.* 2, 2.3, 2.5, 2.8, 3, 3.3, 3.5, 3.8, 4, 4.3, 4.5, 4.8 or 5, the mass of the phenolic compound or phenolic resin in step (1).

Preferably, the temperature of the reaction in step (1) is 60-90 °C, *e.g.* 60 °C, 63 °C, 65 °C, 68 °C, 70 °C, 75 °C, 78 °C, 80 °C, 85 °C, 88 °C or 90 °C.

Preferably, the reaction in step (1) lasts for 4-6 hours, *e.g.* 4, 4.3, 4.5, 4.8, 5, 5.2, 5.5, 5.8 or 6 hours.

Preferably, the protective gas in step (2) is nitrogen gas or argon gas.

Preferably, the heat treatment in step (2) refers to heating to 180-220 °C, *e.g.* 180 °C, 185 °C, 190 °C, 195 °C, 200 °C, 205 °C, 210 °C, 215 °C or 220 °C.

Preferably, the reaction in step (2) lasts for 4-6 hours, *e.g.* 4, 4.3, 4.5, 4.8, 5, 5.2, 5.5, 5.8 or 6 hours.

Preferably, the phosphorus-containing capping reagent in step (3) is anyone selected from the group consisting of 9,10-dihydro-9-oxa-10-phosphaphenanthrene-10-oxide, 9,10-dihydro-9-oxa-10-phosphaphenanthrene-10-oxide, 2-(6H-dibenzo(c,e)(1,2)-5-oxa-6-phosphono-6-phenyl-1,4-hydroquinone, 2-(6H-dibenzo-(c,e)(1,2)-5-oxa-6-phosphono-6-phenyl-4-phenol, 2-(6H-dibenzo(c,e)-(1,2)-5-oxa-6-phosphono-6-phenyl-3 -phenol, 2-(6H-dibenzo(c,e)(1,2)-5-oxa-6-phosphono-6-phenyl-4-benzyl alcohol, 2-(6H-dibenzo(c,e)(1,2)-5-oxa-6-phosphono-6-phenyl-3-benzyl alcohol, and a combination of at least two selected therefrom.

Preferably, the molar ratio of the phenolic hydroxyl groups in the allylated phenolic resin of Formula III in step (3) to the phosphorus-containing capping groups in the phosphorus-containing capping reagent is 1 : (1-1.2), *e.g.* 1:1, 1:1.05, 1:1.1, 1:1.15 or 1:1.2, so that the phenolic hydroxyl groups in the molecular structure of the resin obtained by the reaction are completely terminated by the phosphorus-containing capping groups, to make the resin contain no polar hydroxyl groups.

Preferably, the reaction in step (3) is carried out in the presence of a basic substance.

Preferably, the basic substance is an inorganic base or an organic base, preferably anyone selected from the group consisting of sodium hydroxide, potassium hydroxide, sodium carbonate, potassium carbonate, triethylamine, pyridine, or a combination of at least two selected therefrom.

Preferably, the molar ratio of the basic substance to the phenolic hydroxyl groups in the allylated phenolic resin of Formula III is (1-1.4) : 1, *e.g*. 1:1, 1.05:1, 1.1:1, 1.15:1, 1.2:1, 1.25:1, 1.3:1, 1.35:1 or 1.4:1.

Preferably, the reaction in step (3) is carried out in the presence of carbon tetrachloride.

Preferably, the molar ratio of carbon tetrachloride to the phenolic hydroxyl groups in the allylated phenolic resin of Formula III in step (3) is (1-2) : 1, *e.g.* 1:1, 1.1:1, 1.2:1, 1.3:1, 1.4:1, 1.5:1, 1.6:1, 1.7:1, 1.8:1, 1.9:1 or 2:1.

Preferably, the solvent of the reaction in step (3) is halogenated hydrocarbon solvents, preferably anyone selected from the group consisting of monochloromethane, dichloromethane, chloroform, dichloroethane, and a combination of at least two selected therefrom.

Preferably, the solvent is added in an amount of 2-5 times, *e.g.* 2, 2.3, 2.5, 2.8, 3, 3.3, 3.5, 3.8, 4, 4.3, 4.5, 4.8 or 5, the mass of the allylated phenolic resin of step (3).

Preferably, the temperature of the reaction in step (3) is 0-30 °C, *e.g.* 0 °C, 3 °C, 5 °C, 8 °C, 10 °C, 15 °C, 18 °C, 20 °C, 25 °C, 28 °C or 30 °C, preferably 10 °C.

Preferably, the reaction in step (3) lasts for 4-6 hours, *e.g.* 4, 4.3, 4.5, 4.8, 5, 5.2, 5.5, 5.8 or 6 hours.

The resin prepared by the method of the present invention does not contain polar hydroxyl groups, and has stable molecular structure, low molecular polarity and high reactivity. There is no polar hydroxyl groups generated during the application process thereof, thereby avoiding the effect of secondary hydroxyl groups generated therefrom on the properties of its products. Moreover, the termination with a phosphorus-containing capping group imparts intrinsic flame retardancy to the resin.

On the third aspect, the present invention provides a use of the intrinsic flame-retardant resin with a low polarity above in the preparation of resin composite materials.

The intrinsic flame-retardant resin with low polarity of the present invention can be used as one of the components of the matrix resin in the resin composite materials, and can be co-crosslinked and cured with other thermosetting resins such as epoxy resins and bismaleimide resins, so as to remarkably lower the dielectric constant and dielectric loss.

In the present invention, the resin composite material may be aerospace wave-transmitting composite materials, power insulating materials, resin composite materials for electronic packaging, or resin composite materials for copper-clad laminates.

On the fourth aspect, the present invention provides a use of the intrinsic flame-retardant resin with a low polarity above in the preparation of electronic packaging materials.

The intrinsic flame-retardant resin with a low polarity of the present invention has the characteristics of low molecular polarity and high reactivity, and can also be applied to preparation of materials such as encapsulating adhesives and potting resins in the field of microelectronics.

On the fifth aspect, the present invention provides a use of the intrinsic flame-retardant resin with a low polarity above in the preparation of metal foil clad laminates.

The intrinsic flame-retardant resin with a low polarity of the present invention can be used as one of the components of the matrix resin in the resin composite materials, and can be co-crosslinked and cured with other thermosetting resins such as epoxy resins and bismaleimide resins, thereby remarkably reduce the dielectric constant and dielectric loss of the resin. Its use in the preparation of metal foil-clad laminates is advantageous to reducing the dielectric constant and dielectric loss of the metal foil-clad laminates and improving the heat resistance at the same time. Meanwhile, the flame-retardant phosphorus-containing structure therein makes the metal foil-clad laminates have good flame-retardant effect.

As compared to the prior art, the present invention has the following beneficial effects.

The resin of the present invention contains no polar hydroxyl groups, and has stable molecular structure, low molecular polarity and high reactivity. There is no polar hydroxyl groups generated during the application process thereof, thereby avoiding the effect of secondary hydroxyl groups generated therefrom on the properties of the products thereof. The resin thus still has crosslinkable reactive groups while improving the dielectric properties, so that the high temperature resistance after curing does not change significantly. The introduction of the phosphorus-containing capping groups makes the resin have intrinsic flame-retardant property. The resin can be used as one of the components of the matrix resin in resin composite materials, and can be co-crosslinked and cured with other thermosetting resins such as epoxy resins and bismaleimide resins, so as to remarkably lower the dielectric constant and the dielectric loss. Its use in the preparation of metal foil-clad laminates is advantageous to reducing the dielectric constant and dielectric loss of the metal foil-clad laminates, and having higher high-temperature resistance, and at the same time improving the flame retardancy of the metal foil-clad laminates, so that the metal foil-clad laminates have good comprehensive performances, and can be popularized for electronic packaging adhesives, potting resins, *etc.* It has broad application prospects.

### Description of the Figures

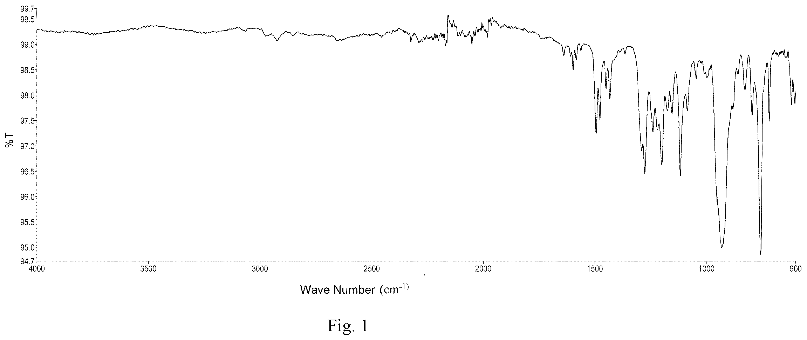

Fig. 1 shows an infrared spectrum diagram of the intrinsic flame-retardant resin with a low polarity prepared in Example 1.

### Embodiments

The technical solutions of the present invention will be further described below by way of specific embodiments. It should be understood by those skilled in the art that the examples are used only to understand the present invention, rather than any specific limitations to the present invention.

### Example 1

In the present example, the low-polarity intrinsic flame-retardant resin was prepared by the following method, including the following steps:
(1) 188 g of acetone was added to a three-necked reaction flask. 228 g of bisphenol A was then added to the reaction flask, stirred and dissolved, and 106 g of sodium carbonate was added. 153 g of a chloropropene solution was slowly added dropwise, and then the reaction was stopped after raising the temperature for 4 hours. Filtration, removal of most of the solvent and washing were carried out, and then removal of residual solvent and water gave bisphenol A diallyl ether.
(2) 134 g of bisphenol A diallyl ether prepared in step (1) was placed in the reaction flask, and subjected to a rearrangement reaction by heating for 6 hours. The mixture was cooled to obtain a brown viscous liquid, *i.e.* diallyl bisphenol A.
(3) An inert gas was introduced into the three-necked reaction flask for protection. 300 g of dichloromethane was added. 134 g of diallyl bisphenol A prepared in step (2) was placed in the reaction flask, stirred and dissolved. 40 g of sodium hydroxide was added, and 152 g of carbon tetrachloride was added. 230 g of 2-(6H-dibenzo(c,e)(1,2)-5-oxa-6-phosphono-6-phenyl-4-phenol was slowly added dropwise, and the reaction was stopped after reacting for 4 hours. An aqueous solution of sodium hydroxide was added to wash to neutrality, then washing was conducted several times to remove residual solvent and water, thereby obtaining phosphorus-containing esterified diallyl bisphenol A, *i.e.* the low-polarity intrinsic flame-retardant resin having the structure thereof as follows:

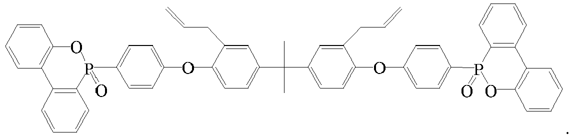

The infrared spectrum diagram of the phosphorus-containing esterified diallyl bisphenol A prepared in this example is shown in Fig. 1 (T% in Fig. 1 indicates % transmittance). It can be seen that the hydroxyl structure at 3300-3500 cm⁻¹ has disappeared and does not contain polar hydroxyl groups, which significantly reduces the molecular polarity.

### Example 2

In the present example, the low-polarity intrinsic flame-retardant resin was prepared by the following method, including the following steps:
(1) 300 g of n-butanol was added to a three-necked reaction flask. 114 g of linear phenolic resin was then added to the reaction flask, stirred and dissolved, and 56 g of potassium hydroxide was added. 153 g of a bromopropane solution was slowly added dropwise, and then the reaction was stopped after raising the temperature for 4 hours. Filtration, removal of most of the solvent and washing were carried out, and then removal of residual solvent and water gave an allyl etherified phenolic resin.
(2) 141 g of the allyl etherified phenolic resin in step (1) was placed in the reaction flask, and subjected to a rearrangement reaction by heating for 4 hours. The mixture was cooled to obtain a brown viscous liquid, *i.e.* allyl phenolic resin.
(3) An inert gas was introduced into the three-necked reaction flask for protection. 350 g of dichloromethane was added. 141 g of the allyl phenolic resin prepared in step (2) was placed in the reaction flask, stirred and dissolved. 72 g of triethylamine was added, and 152 g of carbon tetrachloride was added. 230 g of 2-(6H-dibenzo(c,e)(1,2)-5-oxa-6-phosphono-6-phenyl-4-phenol was slowly added dropwise, and the reaction was stopped after reacting for 4 hours. An aqueous solution of sodium hydroxide was added to wash to neutrality, then washing was conducted several times to remove residual solvent and water, thereby obtaining phosphorus-containing esterified allyl phenolic resin, *i.e.* the low-polarity intrinsic flame-retardant resin having Mn of 1,300 and the structure thereof is as follows:

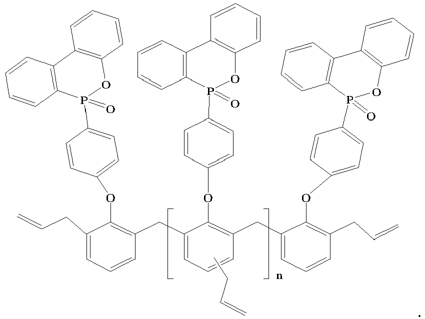

### Example 3

In the present example, the low-polarity intrinsic flame-retardant resin was prepared by the following method, including the following steps:
(1) 250g of toluene was added to a three-necked reaction flask. 118 g of o-cresol novolac resin was then added to the reaction flask, stirred and dissolved, and 100 g of an aqueous solution of sodium hydroxide (having a concentration of 40%) was added, and then 1g of tetrabutylammonium bromide was further added. After the temperature became constant, 153g of a chloropropene solution was slowly added dropwise. The reaction was stopped after raising the temperature for 4 hours. Washing and removal of the solvent were carried out to obtain allyl etherified o-cresol novolac resin.
(2) 159g of the allyl etherified o-cresol novolac resin prepared in step (1) was placed in the reaction flask, and subjected to a rearrangement reaction by heating for 4 hours. The mixture was cooled to obtain a dark brown semisolid, *i.e*. allyl o-cresol novolac resin.
(3) An inert gas was introduced into the three-necked reaction flask for protection. 350 g of dichloromethane was added. 159 g of the allyl o-cresol novolac resin prepared in step (2) was placed in the reaction flask, stirred and dissolved. 103 g of pyridine was added, and 152 g of carbon tetrachloride was added. 230 g of 2-(6H-dibenzo(c,e)(1,2)-5-oxa-6-phosphono-6-phenyl-3-phenol was slowly added dropwise, and the reaction was stopped after reacting for 4 hours. An aqueous solution of sodium hydroxide was added to wash to neutrality, then washing was conducted several times to remove residual solvent and water, thereby obtaining phosphorus-containing esterified allyl o-cresol novolac resin, *i.e.* the low-polarity intrinsic flame-retardant resin having Mn of 1,200 and the structure thereof is as follows:

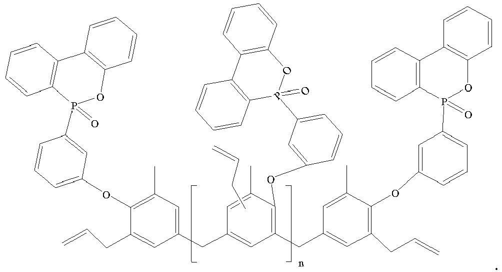

### Example 4

In the present example, the low-polarity intrinsic flame-retardant resin was prepared by the following method, including the following steps:
(1) 250g of toluene was added to a three-necked reaction flask. 118 g of cyclopentadiene novolac resin was then added to the reaction flask, stirred and dissolved, and 100 g of an aqueous solution of sodium hydroxide (having a concentration of 40%) was added, and then 1g of tetrabutylammonium bromide was further added. After the temperature became constant, 153 g of allyl silanol was slowly added dropwise. The reaction was stopped after raising the temperature for 4 hours. Washing and removal of the solvent were carried out to obtain allyl etherified cyclopentadiene novolac resin.
(2) 159 g of allyl etherified cyclopentadiene novolac resin prepared in step (1) was placed in the reaction flask, and subjected to a rearrangement reaction by heating for 4 hours. The mixture was cooled to obtain a dark brown semisolid, *i.e.* allyl cyclopentadiene novolac resin.
(3) An inert gas was introduced into the three-necked reaction flask for protection. 350 g of dichloromethane was added. 159 g of the allyl cyclopentadiene novolac resin prepared in step (2) was placed in the reaction flask, stirred and dissolved. 103 g of pyridine was added, and 152 g of carbon tetrachloride was added. 230 g of 2-(6H-dibenzo(c,e)(1,2)-5-oxa-6-phosphono-6-phenyl-4-benzyl alcohol was slowly added dropwise, and the reaction was stopped after reacting for 4 hours. An aqueous solution of sodium hydroxide was added to wash to neutrality, then washing was conducted several times to remove residual solvent and water, thereby obtaining phosphorus-containing esterified allyl cyclopentadiene novolac resin, *i.e.* the low-polarity intrinsic flame-retardant resin having Mn of 1,280 and the structure thereof is as follows:

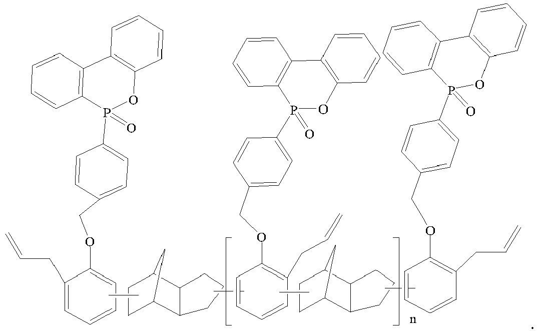

### Example 5

80 parts by weight of liquid styrene-butadiene resin Ricon 100, 20 parts by weight of phosphorus-containing esterified diallyl bisphenol A prepared in Example 1, 85 parts by weight of silica (525), and 6.5 parts by weight of an initiator DCP were mixed, adjusted to a suitable viscosity with a solvent of toluene, stirred and uniformly mixed to uniformly disperse the filler in the resin, so as to obtain a varnish. 1080 glass fiber cloth was impregnated with the varnish above, and then dried to remove the solvent to obtain a prepreg. Eight sheets of prepared prepregs were laminated, and pressed on both sides thereof with copper foils having a thickness of 1 oz (ounce), and cured in a press for 2 hours at a curing pressure of 50 Kg/cm² and a curing temperature of 190 °C to obtain a copper clad laminate.

### Example 6

The only difference from Example 5 was that the phosphorus-containing esterified diallyl bisphenol A prepared in Example 1 was replaced with the phosphorus-containing esterified allyl phenolic resin prepared in Example 2.

### Example 7

The only difference from Example 5 was that the phosphorus-containing esterified diallyl bisphenol A prepared in Example 1 was replaced with the phosphorus-containing esterified allyl o-cresol novolac resin prepared in Example 3.

### Example 8

The only difference from Example 5 was that the phosphorus-containing esterified diallyl bisphenol A prepared in Example 1 was replaced with the phosphorus-containing esterified allyl cyclopentadiene novolac resin prepared in Example 4.

### Comparison Example 1

80 parts by weight of liquid styrene-butadiene resin Ricon 100, 85 parts by weight of silica (525), and 5.8 parts by weight of an initiator DCP were mixed, adjusted to a suitable viscosity with a solvent of toluene, stirred and uniformly mixed to uniformly disperse the filler in the resin, so as to obtain a varnish. 1080 glass fiber cloth was impregnated with the varnish above, and then dried to remove the solvent to obtain a prepreg. Eight sheets of prepared prepregs were laminated, and pressed on both sides thereof with copper foils having a thickness of 1 oz (ounce), and cured in a press for 2 hours at a curing pressure of 50 Kg/cm² and a curing temperature of 190 °C to obtain a copper clad laminate.

The sources of raw materials applied in Examples 5-8 and Comparison Example 1 are shown in Table 1, and the physical property data of the prepared copper clad laminates are shown in Table 2.

**Table 1**

| Manufacturer | Product name or Brand | Material content |
|---|---|---|
| Sartomer | Ricon 100 | Styrene-butadiene resin |
| Homemade | Esterified-2-allylphenol | |
| Sibelco | 525 | Silica micropowder |
| Shanghai Gaoqiao | DCP | Dicumyl peroxide |
| Shanghai Honghe | 1080 glass fiber cloth | Having a thickness of 0.05mm and a basis weight of 48 g/m² |

**Table 2**

| Performance | Example 5 | Example 6 | Example 7 | Example 8 | Comp. Example 1 |
|---|---|---|---|---|---|
| Dielectric constant (10GHZ) | 3.62 | 3.83 | 3.76 | 3.58 | 3.5 |
| Dielectric loss tangent (10GHZ) | 0.0054 | 0.0058 | 0.0055 | 0.0048 | 0.004 |
| Dip soldering resistance 288°C, (s) | >300 | >300 | >300 | >300 | 15 |
| Glass transition temperature (°C) (DSC) | 156 | 182 | 178 | 185 | 10 |
| Flame retardancy | No combustion | No combustion | No combustion | No combustion | Combustion |
| Glass dipping operation | Good, not sticky | Good, not sticky | Good, not sticky | Good, not sticky | Poor, sticky |

It can be seen from Table 2 that the low-polarity intrinsic flame-retardant resin prepared according to the present invention can make the copper clad laminates have lower dielectric constant and dielectric loss, and have better high temperature resistance and flame retardancy. The applicant claims that the low-polarity intrinsic flame-retardant resin of the present invention, its preparation method and application are described by the above examples. However, the present invention is not limited to the above examples, *i.e.* it does not mean that the present invention cannot be carried out unless the above examples are applied. Those skilled in the art shall know that any modifications of the present invention, equivalent substitutions of the materials selected for use in the present invention, and additions of auxiliary ingredients, and specific manners in which they are selected, are all within the protection scope and disclosure scope of the present invention.

## Claims

1. An intrinsic flame-retardant resin with a low polarity, **characterized in that** the intrinsic flame-retardant resin with a low polarity has a structure as shown in Formula I: 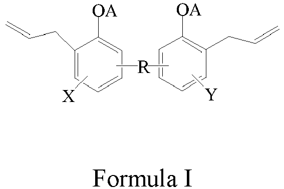 wherein R is a linear or branched alkyl, 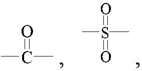 -O-, 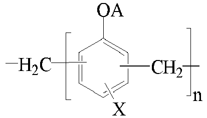 or 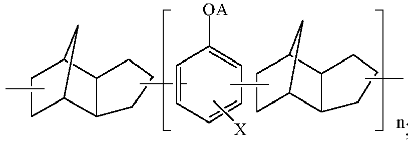 X and Y are independently selected from the group consisting of hydrogen, allyl, linear alkyl, branched alkyl, and a combination of at least two selected therefrom; A is a phosphorus-containing capping group; and n is an integer of 1-20.

2. The intrinsic flame-retardant resin with a low polarity claimed in claim 1, **characterized in that** R is selected from the group consisting of -CH₂-, 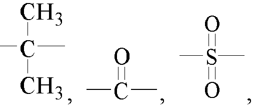 -O-, 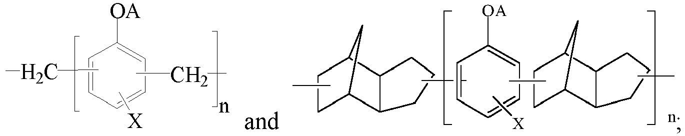 n is an integer of 1-20; X and Y are independently selected from the group consisting of hydrogen, allyl, linear alkyl, branched alkyl, and a combination of at least two selected therefrom; and A is a phosphorus-containing capping group;
preferably, A is a DOPO-containing group, preferably anyone selected from the group consisting of 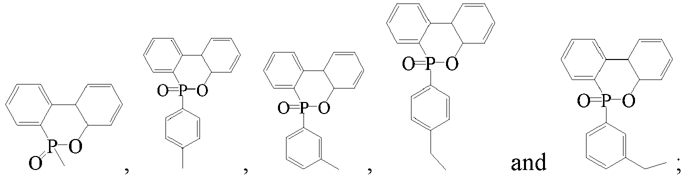 preferably, the intrinsic flame-retardant resin with a low polarity is anyone selected from the group consisting of the compounds having the following Formulae A-E, and a combination of at least two selected therefrom: 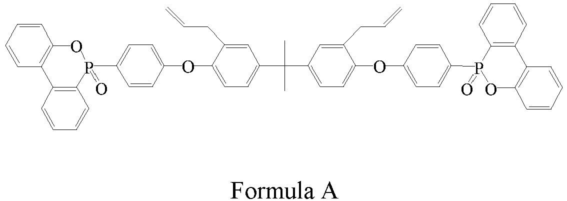 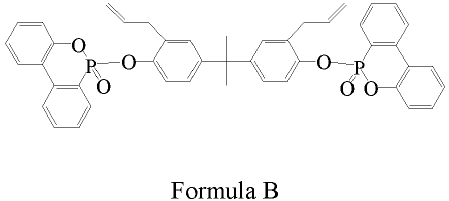 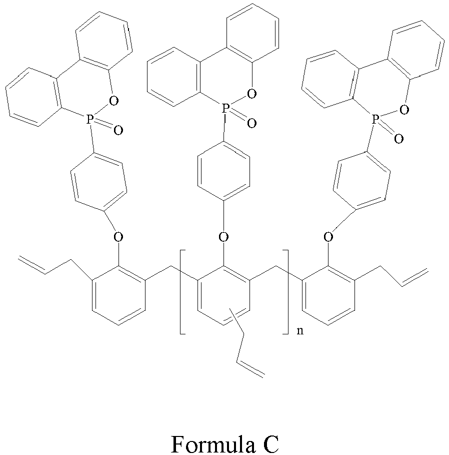 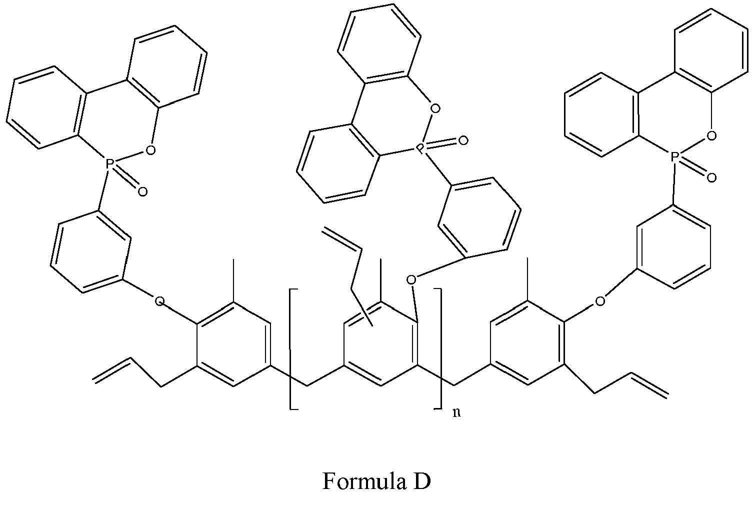 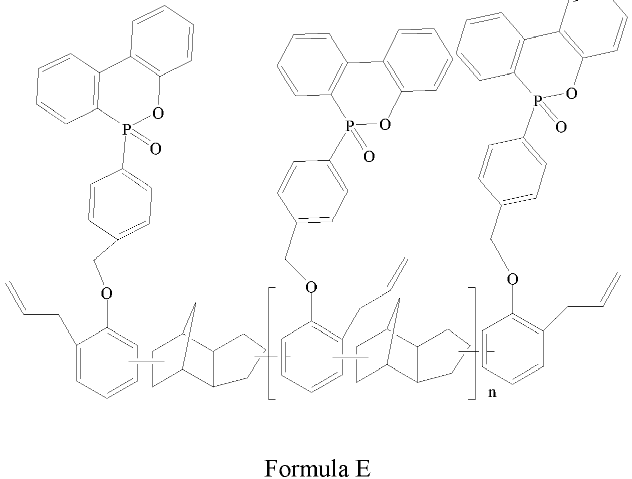 wherein n is an integer of 1-20.

3. A process for preparing the intrinsic flame-retardant resin with a low polarity claimed in claim 1, **characterized in that** the process comprises the following steps:
(1) a phenolic compound or a phenolic resin of Formula II is reacted with an allylation reagent to obtain an allyl etherified resin of Formula III, wherein the reaction formula is as follows: 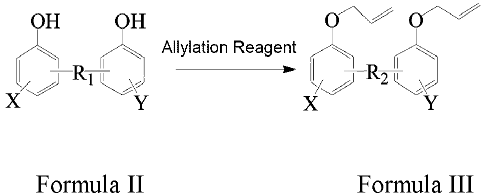
(2) the allyl etherified resin of Formula III is heated under the protection of a protective gas, and an intramolecular rearrangement reaction occurs to obtain an allylated phenolic resin of Formula IV: 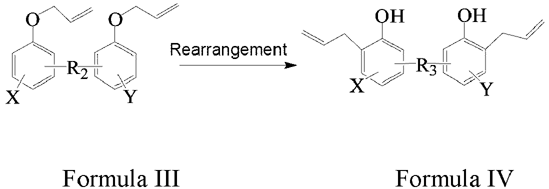
(3) the allylated phenolic resin of Formula III is reacted with a phosphorus-containing capping reagent to obtain the intrinsic flame-retardant resin with a low polarity of Formula I: 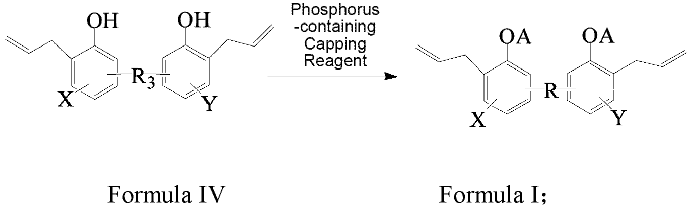 wherein R₁ is selected from the group consisting of linear or branched alkyl, 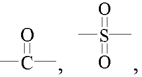 -O-, 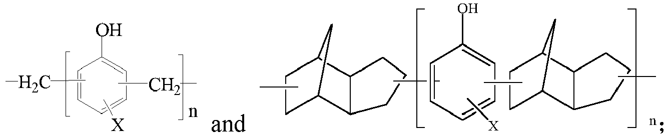 R₂ is selected from the group consisting of linear or branched alkyl 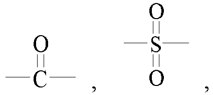 -O-, 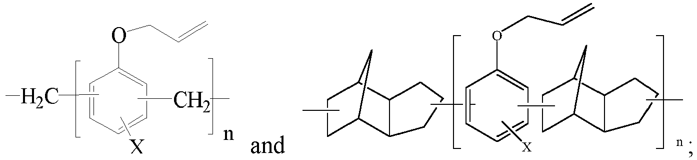 R₃ is selected from the group consisting of linear or branched alkyl, 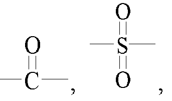 -O-, 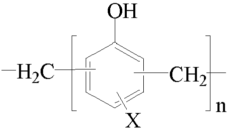 and 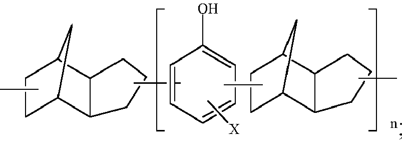 R is selected from the group consisting of linear or branched alkyl, 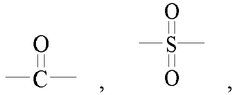 -O- , 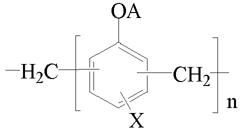 and 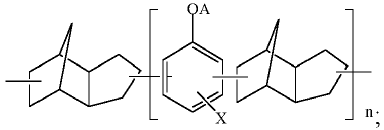 X and Y are independently selected from the group consisting of hydrogen, allyl, linear alkyl, branched alkyl, and a combination of at least two selected therefrom; A is a phosphorus-containing capping group; and n is an integer of 1-20.

4. The process claimed in claim 3, **characterized in that** the phenolic compound or phenolic resin in step (1) is phenol, dihydric phenol, polyhydric phenol or derivatives thereof, preferably anyone selected from the group consisting of phenol, o-cresol, bisphenol A, bisphenol F, tetramethyl bisphenol A, phenol resin, o-cresol novolac resin, cyclopentadiene novolac resin, and a combination of at least two selected therefrom;
preferably, the allylation reagent is anyone selected from the group consisting of allyl silanol, allyl chloride, allyl bromide, allyl iodide, allylamine, and a combination of at least two selected therefrom;
preferably, the molar ratio of the phenolic compound or phenolic resin to the allylation reagent is 1 : (0.3-1.2);
preferably, the reaction in step (1) is carried out in the presence of a basic substance which is preferably anyone selected from the group consisting of sodium hydroxide, potassium hydroxide, sodium carbonate, potassium carbonate, and a combination of at least two selected therefrom;
preferably, the molar ratio of the basic substance to the phenolic hydroxyl groups contained in the phenolic compound or phenolic resin in step (1) is (0.3-1.4) : 1.

5. The process claimed in claim 3 or 4, **characterized in that** the reaction in step (1) is carried out in the presence of a phase transfer catalyst;
preferably, the phase transfer catalyst is quaternary-ammonium-salt phase transfer catalysts, preferably anyone selected from the group consisting of tetrabutylammonium chloride, tetrabutylammonium bromide, benzyltriethylammonium chloride, tetrabutylammonium hydrogen sulfate, trioctylmethylammonium chloride, dodecyltrimethylammonium chloride, tetradecylbromotrimethylammonium chloride, and a combination of at least two selected therefrom;
preferably, the phase transfer catalyst is added in an amount of 0.1 to 5% by mass of the phenolic compound or phenolic resin of step (1);
preferably, the solvent of the reaction in step (1) is anyone selected from the group consisting of alcohol solvents, aromatic hydrocarbon solvents, ketone solvents, and a combination of at least two selected therefrom, preferably anyone selected from the group consisting of ethanol, propanol, butanol, toluene, xylene, and a combination of at least two selected therefrom;
preferably, the solvent is added in an amount of 2-5 times the mass of the phenolic compound or phenolic resin in step (1);
preferably, the temperature of the reaction in step (1) is 60-90 °C;
preferably, the reaction in step (1) lasts for 4-6 hours.

6. The process claimed in any of claims 3-5, **characterized in that** the protective gas in step (2) is nitrogen gas or argon gas;
preferably, the heat treatment in step (2) refers to heating to 180-220 °C;
preferably, the reaction in step (2) lasts for 4-6 hours.

7. The process claimed in any of claims 3-6, **characterized in that** the phosphorus-containing capping reagent in step (3) is anyone selected from the group consisting of 9,10-dihydro-9-oxa-10-phosphaphenanthrene-10-oxide, 9,10-dihydro-9-oxa-10-phosphaphenanthrene-10-oxide, 2-(6H-dibenzo(c,e)(1,2)-5-oxa-6-phosphono-6-phenyl-1,4-hydroquinone, 2-(6H-dibenzo-(c,e)(1,2)-5-oxa-6-phosphono-6-phenyl-4-phenol, 2-(6H-dibenzo(c,e)(1,2)-5-oxa-6-phosphono-6-phenyl-3-phenol, 2-(6H-dibenzo(c,e)(1,2)-5-oxa-6-phosphono-6-phenyl-4-benzyl alcohol, 2-(6H-dibenzo(c,e)(1,2)-5-oxa-6-phosphono-6-phenyl-3-benzyl alcohol, and a combination of at least two selected therefrom;
preferably, the molar ratio of the phenolic hydroxyl groups in the allylated phenolic resin of Formula III in step (3) to the phosphorus-containing capping groups in the phosphorus-containing capping reagent is 1 : (1-1.2);
preferably, the reaction in step (3) is carried out in the presence of a basic substance;
preferably, the basic substance is an inorganic base or an organic base, preferably anyone selected from the group consisting of sodium hydroxide, potassium hydroxide, sodium carbonate, potassium carbonate, triethylamine, pyridine, and a combination of at least two selected therefrom;
preferably, the molar ratio of the basic substance to the phenolic hydroxyl groups in the allylated phenolic resin of Formula III is (1-1.4) : 1;
preferably, the reaction in step (3) is carried out in the presence of carbon tetrachloride;
preferably, the molar ratio of carbon tetrachloride to the phenolic hydroxyl groups in the allylated phenolic resin of Formula III in step (3) is (1-2) : 1;
preferably, the solvent of the reaction in step (3) is halogenated hydrocarbon solvents, preferably anyone selected from the group consisting of monochloromethane, dichloromethane, chloroform, dichloroethane, and a combination of at least two selected therefrom;
preferably, the solvent is added in an amount of 2-5 times the mass of the allylated phenolic resin of step (3);
preferably, the temperature of the reaction in step (3) is 0-30°C, preferably 10°C;
preferably, the reaction in step (3) lasts for 4-6 hours.

8. A use of the intrinsic flame-retardant resin with a low polarity claimed in claim 1 or 2 in the preparation of resin composite materials.

9. A use of the intrinsic flame-retardant resin with a low polarity claimed in claim 1 or 2 in the preparation of electronic packaging materials.

10. A use of the intrinsic flame-retardant resin with a low polarity claimed in claim 1 or 2 in the preparation of metal foil clad laminates.
